# EUROPÄISCHE PATENTANMELDUNG

(11) **EP 2 354 807 A2**
(43) Veröffentlichungstag der Anmeldung: **10.08.2011**
(21) Anmeldenummer: 11151102.8
(22) Anmeldetag: 17.01.2011
(51) Int. Cl.: G01S 7/527, G01S 15/08, G01S 15/93

(54) **Verfahren zur Messung des Abstandes zwischen einem Objekt und einem Kraftfahrzeug**

(30) Priorität: 29.01.2010 DE 102010001370
(71) Anmelder: Robert Bosch GmbH, 70442 Stuttgart (DE)
(72) Erfinder: Hoenes, Frank, 71254 Ditzingen (DE); Seidel, Frank, 70439 Stuttgart (DE)

(57) **Zusammenfassung**

Die Erfindung betrifft ein Verfahren zur Messung des Abstands zwischen einem Objekt und einem Kraftfahrzeug mit am Kraftfahrzeug positionierten Abstandssensoren (1), bei dem zunächst der Abstand zwischen dem Kraftfahrzeug und dem Objekt (23) mit einem ersten Abstandssensor (5) bestimmt wird, in einem weiteren Schritt der Abstand zu einem Objekt (23) durch Kreuzecho des ersten Abstandssensors (5) und einem zweiten Abstandssensor (33) erfasst wird oder ein Direktecho des zweiten Abstandssensors (33) und bei dem das Direktecho des ersten Abstandssensors (5) für die Berechnung des Abstands zu einem Objekt (23) eliminiert wird, wenn das Kreuzecho oder das Direktecho des zweiten Abstandssensors (33) einen größeren Abstand liefern als für das Kreuzecho oder das Direktecho des zweiten Abstandssensors (33) vorgegebene Grenzwerte (35, 37).

## Beschreibung

### Stand der Technik

Die Erfindung betrifft ein Verfahren zur Messung des Abstandes zwischen einem Objekt und einem Kraftfahrzeug mit am Kraftfahrzeug positionierten Abstandssensoren.

Verfahren zur Messung des Abstandes zwischen einem Kraftfahrzeug und einem Objekt mit am Fahrzeug positionierten Abstandssensoren werden insbesondere eingesetzt, um den Fahrer des Kraftfahrzeugs bei Rangiermanövern zu unterstützen. Übliche Rangiermanöver, bei denen das Verfahren eingesetzt wird, sind zum Beispiel Einparkvorgänge.

Um den Abstand zu einem Objekt zu messen, wird üblicherweise von einem Abstandssensor ein Signal gesendet und ein von einem Objekt reflektiertes Echo empfangen. Aus der Laufzeit des Signals zwischen dem Senden des Signals und dem Empfang des Echos lässt sich der Abstand des Objekts zum Sensor ermitteln. Sensoren, die derzeit zur Abstandmessung eingesetzt werden, sind zum Beispiel Ultraschallsensoren, Radarsensoren, Infrarotsensoren oder LIDAR-Sensoren.

Allen diesen Sensoren ist es gemeinsam, dass das gesendete Signal von einem Objekt, das sich im Sendekegel des Signals befindet, reflektiert wird und das Echo vom Sensor empfangen wird. Ein Hinweis auf die Richtung zum Objekt lässt sich hierdurch nicht ermitteln.

Ein Verfahren, bei dem auch Objekte in der Umgebung des Fahrzeugs mithilfe von Ultraschall-Abstandssensoren ermittelt werden, ist zum Beispiel in DE-A 196 45 339 beschrieben. Bei dem hier beschriebenen Verfahren wird die Empfindlichkeit der Sensoren entsprechend den Fahrzeugdaten, insbesondere den dynamischen Daten, geändert.

Der von den Abstandssensoren ermittelte Abstand zu einem Objekt wird dem Fahrer üblicherweise optisch und/oder akustisch angezeigt. Eine optische Anzeige erfolgt zum Beispiel mit LEDs, die in Reihe angeordneten sind. Mit abnehmendem Abstand zu einem detektierten Objekt nimmt die Anzahl der aufleuchtenden LEDs zu. Bei einer Annäherung unter einen vorgegebenen Grenzwert ist es hierbei zum Beispiel möglich, dass LEDs mit unterschiedlicher Farbe, beispielsweise rot, eingesetzt werden, um dem Fahrer einen eindeutigen Hinweis zu geben, das Fahrzeug baldmöglichst anzuhalten. Eine akustische Anzeige erfolgt zum Beispiel durch das Senden von repetierenden Signaltönen, wobei üblicherweise der Abstand zwischen zwei Tönen mit abnehmendem Abstand zum Objekt ebenfalls abnimmt. Bei Unterschreiten eines vorgegebenen Grenzwerts ertönt eine Stopp-Warnung in Form eines Dauertons.

Die minimale Entfernung eines Objekts, die mit den Sensoren erfasst werden kann, ergibt sich insbesondere bei Ultraschall-Sensoren aus dem Nachschwingen des Membransystems. So kann der Sensor ein Signal zum Beispiel erst dann empfangen, wenn das Nachschwingen der Membran beendet ist. In Abhängigkeit vom technischen Aufbau des Ultraschallsensors liegt die Grenze, ab der der Abstand erfasst werden kann, zum Beispiel bei ungefähr 20 cm.

Bei modernen Systemen zur Einparkunterstützung, die neben der Abstandsmessung auch die Vermessung von Parklücken anbieten, sind im Frontbereich zusätzlich Sensoren vorgesehen, die den Abstand zu Objekten neben dem Fahrzeug erfassen. Diese Sensoren werden ebenfalls zur Abstandsmessung bei der Einparkunterstützung eingesetzt. Aufgrund der Position der Sensoren können diese jedoch bei eingeschlagenen Rädern die Lauffläche des Rades als Objekt und damit als Hindernis erkennen. Da in einem solchen Fall für den Fahrer nicht ersichtlich ist, dass der Sensor das Rad und kein Hindernis detektiert, sind entsprechende Signale als Warnhinweis für den Fahrer unerwünscht. Mit den derzeitig eingesetzten Verfahren zur Erfassung des Abstandes eines Objekts zum Kraftfahrzeug lassen sich jedoch Abstandssignale, die durch Reflektion von der Lauffläche eines eingeschlagenen Rads stammen, nicht eliminieren.

### Offenbarung der Erfindung

### Vorteile der Erfindung

Das erfindungsgemäße Verfahren zur Messung des Abstandes zwischen einem Objekt und einem Kraftfahrzeug mit am Kraftfahrzeug positionierten Abstandssensoren umfasst folgende Schritte:
(a) Senden eines Signals von einem ersten Abstandssensor, Empfangen eines von einem Objekt reflektierten Echos des Signals von dem ersten Abstandssensor als Direktecho des ersten Abstandssensors und Berechnen des Abstands zwischen dem Kraftfahrzeug und dem Objekt aus der Zeitspanne zwischen Senden des Signals und Empfangen des Echos des Signals,
(b) Empfangen des von einem Objekt reflektierten Echos von einem zweiten Abstandssensor und/oder Senden eines zweiten Signals vom zweiten Abstandssensor und Empfangen des von dem Objekt reflektierten Echos vom ersten Abstandssensor als Kreuzecho und Berechnen des Abstands zwischen Kraftfahrzeug und dem Objekt aus der Zeitspanne zwischen Senden des Signals und Empfangen des Echos und/oder Senden eines Signals von dem zweiten Abstandssensor und Empfangen des Echos von einem Objekt von dem zweiten Abstandssensor als Direktecho des zweiten Abstandssensors und Berechnen des Abstands zwischen dem Kraftfahrzeug und dem Objekt aus der Zeitspanne zwischen Senden des Signals und Empfangen des Echos, wenn das Objekt so positioniert ist, dass ein Signal des zweiten Abstandssensors von dem Objekt reflektiert werden kann oder ein Echo eines Signals von dem Objekt von dem zweiten Abstandssensor empfangen werden kann,
(c) Eliminieren des Direktechos des ersten Abstandssensors für die Berechnung des Abstands zu einem Objekt, wenn das Kreuzecho oder das Direktecho des zweiten Abstandssensors größer sind als ein für das Kreuzecho oder das Direktecho des zweiten Abstandssensors vorgegebener Grenzwert.

Eine Detektierung der Lauffläche der lenkbaren Räder kann insbesondere dann erfolgen, wenn der erste Abstandssensor seitlich am Fahrzeug angebracht ist, wie dies zum Beispiel auch erforderlich ist, wenn mit den Abstandssensoren auch Parklücken für automatisierte Einparksysteme erfasst werden sollen. Hierzu ist es insbesondere vorteilhaft, wenn die Sensoren möglichst senkrecht zur Fahrtrichtung ausgerichtet sind. Bei derzeit eingesetzten Systemen wird üblicherweise ein Winkel von mehr als 75 Grad bezogen auf die Fahrzeuglängsachse realisiert, um eine ausreichende Stabilität zum Vermessen von Parklücken zu erhalten. Weiterhin wird aus Designgründen auf einen optisch günstigen Einbau geachtet, so dass die Sensormembran üblicherweise möglichst flächenbündig mit der Stoßfängeroberfläche bei Einbau in einen Stoßfänger des Kraftfahrzeugs ist. Hierdurch wird ein größerer Sensortrichter oder ein Hervorstehen des Ultraschallsensors vermieden. Diese Art des Einbaus führt dazu, dass, um eine möglichst senkrechte Ausrichtung zur Fahrzeugachse zu erhalten, ein Einbau nahe des Radkastens des Fahrzeugs notwendig ist. In diesem Fall kann durch den dem Radkasten benachbarten Sensor die Lauffläche des Rades erfasst werden.

Durch das erfindungsgemäße Verfahren können Echos eines Signals, die von der Lauffläche eines Rades des Fahrzeugs reflektiert werden, eliminiert werden. Auf diese Weise werden dem Fahrer des Fahrzeugs nur noch Abstände zu Objekten, die in der Umgebung des Fahrzeugs liegen, angezeigt.

Das erfindungsgemäße Verfahren wird insbesondere dann eingesetzt, wenn der Abstand zwischen dem Abstandssensor und der Lauffläche des eingeschlagenen Rads größer ist als die minimale vom Abstandssensor detektierbare Distanz. Wenn die Distanz zwischen Lauffläche des Rads und Abstandssensor kleiner ist als der minimal detektierbare Abstand des Sensors, wird kein brauchbares Signal geliefert und die Lauffläche des Rads wird nicht als Objekt erkannt. Die minimale Distanz ergibt sich bei Ultraschallsensoren durch die Nachschwingzeit der Membran. Solange die Membran vom Senden des Signals noch nachschwingt, kann kein ankommendes Echo des Signals detektiert werden.

Da sich der Abstand der Lauffläche des Rads zum Abstandssensor mit dem Einschlagwinkel des Rades ändert, ist es vorteilhaft, wenn der vorgegebene Grenzwert für das Kreuzecho oder das Direktecho des zweiten Abstandssensors abhängig ist von der Radstellung des lenkbaren Rads. Die Radstellung des lenkbaren Rads ist gleichzeitig abhängig von der Lenkradposition, so dass die jeweilige Lenkradposition genutzt werden kann, um den Grenzwert zu bestimmen. Der vorgegebene Grenzwert wird dabei vorzugsweise so gewählt, dass ein Objekt, das näher am Sensor ist als der durch den vorgegebenen Grenzwert vorgegebene Abstand, als Hindernis erfasst wird und auch vom ersten Abstandssensor erfasste Daten zur Distanzermittlung zu dem Objekt herangezogen werden. Der Einsatz von mindestens zwei Sensoren zur Distanzermittlung hat den Vorteil gegenüber der Verwendung nur eines Sensors, dass gleichzeitig auch die Richtung des Objekts bestimmt werden kann.

Um nicht auch Signale zu eliminieren, die von Objekten stammen, die weiter entfernt sind als die Lauffläche des eingeschlagenen Rades, ist es weiterhin bevorzugt, wenn das Direktecho des ersten Abstandssensors nur dann eliminiert wird, wenn das Kreuzecho oder das Direktecho des zweiten Abstandssensors größer ist als ein für das Kreuzecho oder das Direktecho des zweiten Abstandssensors vorgegebener Grenzwert, wenn gleichzeitig der aus dem Direktecho des ersten Abstandssensors berechnete Abstand größer ist als ein für den Abstandssensor vorgegebener Minimalwert und kleiner als ein vorgegebener Maximalwert. Durch den vorgegebenen Minimalwert und vorgegebenen Maximalwert, zwischen denen der aus dem Direktecho des ersten Abstandssensors berechnete Abstand liegen muss, wird sichergestellt, dass nur Objekte, die den gleichen Abstand wie die Lauffläche des Rades zum Sensor haben, eliminiert werden. Auf diese Weise werden Objekte, deren Abstand größer ist als die Lauffläche des Rades zum ersten Abstandssensor beziehungsweise deren Abstand kleiner ist als der Abstand der Lauffläche des Rades zum ersten Abstandssensor nicht eliminiert und die vom ersten Abstandssensor erfassten Daten zu diesem Objekt werden zur Berechnung des Abstandes herangezogen.

Da mit zunehmendem Lenkradeinschlag der maximale Abstand der Lauffläche des Rades vom ersten Abstandssensor zunimmt, ist es weiterhin bevorzugt, wenn der vorgegebene Maximalwert abhängig ist von der Radstellung des lenkbaren Rads. Auch in diesem Fall kann die Radstellung des lenkbaren Rads zum Beispiel durch die Stellung des Lenkrads bestimmt werden.

Der für den ersten Abstandssensor vorgegebene Minimalwert kann in einer Ausführungsform abhängig sein von der Nachschwingzeit des Abstandssensors. Wenn der minimale Abstand zur Lauffläche des lenkbaren Rads kleiner ist als der minimal erfassbare Abstand aufgrund der Nachschwingzeit der Membran des Sensors, entspricht der vorgegebene Minimalwert dem durch die Nachschwingzeit des Abstandssensors vorgegebenen minimal erfassbaren Abstand. Wenn der minimale Abstand der Lauffläche des Rads größer ist als der minimal erfassbare Abstand aufgrund der Nachschwingzeit der Membran des Abstandssensors,
ist es alternativ vorteilhaft, wenn der vorgegebene Minimalwert ebenso wie der vorgegebene Maximalwert abhängig ist von der Radstellung des lenkbaren Rads. So nimmt zum Beispiel der minimale Abstand der Lauffläche des lenkbaren Rads zum Abstandssensor mit zunehmendem Lenkradwinkel im Allgemeinen zunächst ab und dann wieder zu. Der entsprechende Minimalwert kann dann ebenfalls zum Beispiel aus der Lenkradposition bestimmt werden.

Da die Lauffläche des lenkbaren Rads nur dann das Signal reflektiert und ein Echo des Signals vom ersten Abstandssensor empfangen werden kann, wenn das Rad eingelenkt ist, ist es weiterhin vorteilhaft, wenn bei Geradeausfahrt des Fahrzeugs der vorgegebene Minimalwert und der vorgegebene Maximalwert gleich groß sind. Da die Lauffläche des Rads nur dann detektiert wird, wenn der vom ersten Abstandssensor detektierte Abstand zwischen dem vorgegebenen Minimalwert und dem vorgegebenen Maximalwert liegt und bei gleich großem Maximalwert kein Wert dazwischen liegen kann, werden keine Signale des ersten Abstandssensors bei Geradeausfahrt eliminiert.

In einer weiteren Ausführungsform der Erfindung ist es auch möglich, dass ein Direktecho des ersten Abstandssensors dann nicht eliminiert wird, wenn dieses zwischen dem vorgegebenen Maximalwert und dem vorgegebenen Minimalwert liegt, wenn eine Annäherung des Kraftfahrzeugs an das mit dem Direktecho detektierte Objekt festgestellt wird und anfänglich empfangene Direktechos des ersten Abstandssensors größer waren als der vorgegebene Maximalwert. In diesem Fall wird realisiert, dass es sich um ein kontinuierliches Annähern an ein Objekt handelt und nicht um die Lauffläche des Rades, die immer den gleichen oder vergleichbare Abstände zum Fahrzeug aufweist. Insbesondere kann die Lauffläche des Rades nicht weiter entfernt sein als der vom System vorgegebene Maximalwert.

Abstandssensoren, die für das erfindungsgemäße Verfahren eingesetzt werden können, sind beliebige, dem Fachmann bekannte Abstandssensoren. Geeignete Abstandssensoren sind zum Beispiel Ultraschallsensoren, Infrarotsensoren, Radarsensoren, kapazitive Sensoren oder LIDAR-Sensoren. Insbesondere eignet sich das erfindungsgemäße Verfahren für Ultraschallsensoren.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: eine schematische Darstellung des Frontbereichs mit Abstandssensoren eines Kraftfahrzeugs,
- Figur 2: eine schematische Darstellung gemäß Figur 1 mit einem Objekt in der Nähe des Kraftfahrzeugs,
- Figur 3: eine schematische Darstellung der linken Vorderseite eines Kraftfahrzeugs mit nicht eingelenktem Rad,
- Figur 4: eine schematische Darstellung der linken Vorderseite eines Kraftfahrzeugs mit leichtem Radeinschlag,
- Figur 5: eine schematische Darstellung der linken Vorderseite eines Kraftfahrzeugs mit starkem Radeinschlag,
- Figur 6: eine schematische Darstellung der linken Vorderseite eines Kraftfahrzeugs mit starkem Radeinschlag und Grenzwerten für Kreuzecho und Direktecho eines zweiten Abstandssensors.

### Ausführungsbeispiele der Erfindung

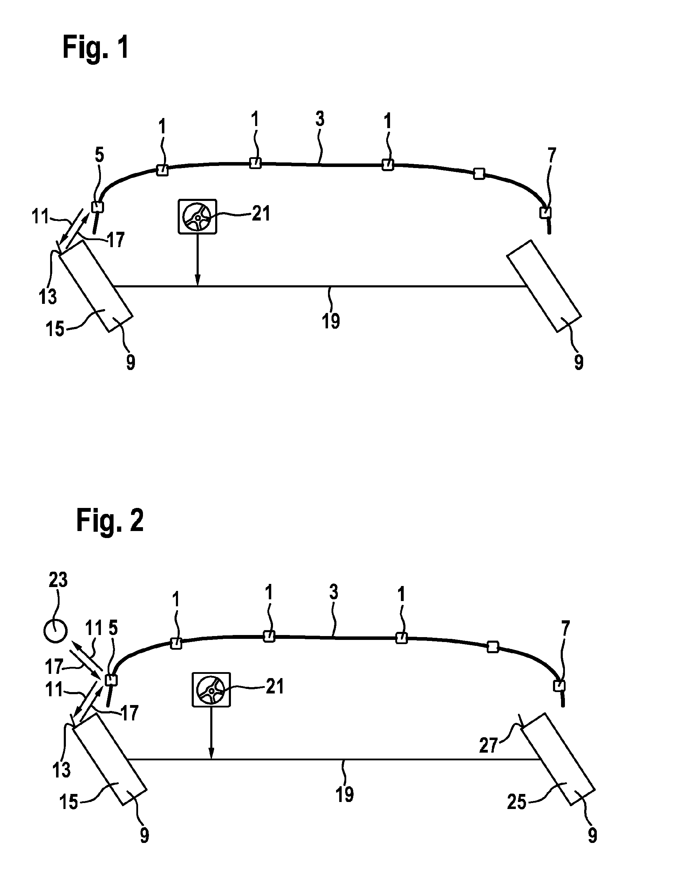

In Figur 1 ist der Frontbereich mit Abstandssensoren eines Kraftfahrzeugs schematisch dargestellt.

Zur Bestimmung des Abstands des Kraftfahrzeugs zu Objekten, die sich im Frontbereich vor oder neben dem Fahrzeug befinden, sind am Fahrzeug Abstandssensoren 1 angebracht. Üblicherweise sind die Abstandssensoren 1 im vorderen Stoßfänger 3 des Kraftfahrzeugs angeordnet. In der hier dargestellten schematischen Darstellung ist der vordere Stoßfänger 3 lediglich durch eine Linie angedeutet.

Die Abstandssensoren 1 sind gleichmäßig verteilt über den vorderen Stoßfänger 3 des Kraftfahrzeugs positioniert. Hierdurch wird eine Abdeckung des gesamten Frontbereichs erzielt, so dass Objekte, die sich im Frontbereich des Kraftfahrzeugs befinden, erfasst werden können.

In der hier dargestellten Ausführungsform sind im vorderen Stoßfänger 3 des Kraftfahrzeugs sechs Abstandssensoren 1 positioniert. Neben sechs Abstandssensoren, wie sie in Figur 1 dargestellt sind, ist auch jede beliebige andere Anzahl an Abstandssensoren im vorderen Stoßfänger 3 denkbar. So können zum Beispiel auch 4, 5, 7 oder 8 Abstandssensoren vorgesehen sein. Üblich ist jedoch der Einsatz von sechs Abstandssensoren 1 im vorderen Stoßfänger 3.

Insbesondere wenn die Abstandssensoren 1 auch dazu eingesetzt werden, den Bereich neben dem Fahrzeug zu erfassen, um zum Beispiel mögliche Parklücken zu vermessen, sind ein erster Abstandssensor 5 und ein letzter Abstandssensor 7 im seitlichen Bereich des vorderen Stoßfängers 3 positioniert, so dass die Messrichtung auch zur Seite des Fahrzeugs ausgerichtet ist. Mit dem ersten Abstandssensor 5 wird der Bereich auf der Fahrerseite des Kraftfahrzeugs und mit dem letzten Abstandssensor 7 der Bereich auf der Beifahrerseite des Kraftfahrzeugs abgedeckt. Um eine Parklücke mit ihren geometrischen Begrenzungen, zum Beispiel Fahrzeugen, Pfosten oder Bordsteinen, zuverlässig zu erkennen, ist es notwendig, dass die seitlichen Sensoren, das heißt der erste Abstandssensor 5 und der letzte Abstandssensor 7 so ausgerichtet sind, dass diese möglichst senkrecht zur Fahrtrichtung des Kraftfahrzeugs Daten erfassen. Im Allgemeinen wird ein Winkel von mehr als 75° bezogen auf die Fahrzeuglängsachse realisiert, um diese Funktion darzustellen.

Die Abstandssensoren 1 werden üblicherweise flächenbündig mit der Stoßfängeroberfläche eingebaut. Dies führt zu einem optisch günstigen Einbau. Durch den entsprechenden Einbau werden größere Sensortrichter oder ein Vorstehen der Abstandssensoren 1 vermieden. Insbesondere für den ersten Abstandssensor 5 und den letzten Abstandssensor 7 hat dies zur Folge, dass diese Sensoren 5, 7 aufgrund der notwendigen Ausrichtung, um den Bereich neben dem Fahrzeug zu erfassen, möglichst nah am Radkasten und damit möglichst dicht an den lenkbaren Vorderrädern 9 des Kraftfahrzeugs positioniert werden müssen. Aufgrund des Einbaus dicht an den lenkbaren Vorderrädern 9 kann dies dazu führen, dass ein vom ersten Abstandssensor 5 gesendeter lmpuls 11 bei nach links eingeschlagenen lenkbaren Vorderrädern 9 von der Lauffläche 13 des linken Vorderrads 15 reflektiert wird und das reflektierte Signal als Echo 17 vom ersten Abstandssensor 5 wieder empfangen wird. Auf diese Weise wird die Lauffläche 13 des linken Vorderrads 15 als Objekt erfasst und damit eine entsprechende Warnung an den Fahrer ausgegeben, dass sich ein Objekt im Bereich des ersten Abstandssensors 5 befindet. Das linke Vorderrad 15 stellt jedoch kein Hindernis dar, so dass der Fahrer entsprechend keine Warnung erhalten sollte.

Um die lenkbaren Vorderräder 9 lenken zu können, sind diese an einer Vorderachse 19 montiert und lassen sich über ein Lenkrad 21 ansteuern. Die Einwirkung des Lenkrads 21 auf die Vorderachse 19 zum Ansteuern der lenkbaren Vorderräder 9 ist durch einen Pfeil schematisch dargestellt.

In Figur 2 ist eine schematische Darstellung entsprechend Figur 1 gezeigt, wobei sich ein Objekt in der Nähe des Kraftfahrzeugs befindet.

Bei einem eingeschlagenen lenkbaren Vorderrad 9 wird vom ersten Abstandssensor 5 bei einem gesendeten lmpuls 11 das von der Lauffläche 13 reflektierte Signal als Echo 17 empfangen. Das vom ersten Abstandssensor 5 gesendete Signal 11 wird weiterhin von einem Objekt 23 reflektiert und als Echo 17 vom ersten Abstandssensor 5 aufgenommen. Der erste Abstandssensor 5 erhält somit Signale von der Lauffläche 13 des lenkbaren Vorderrads 15 und vom Objekt 23, das für die weitere Bewegung des Kraftfahrzeugs ein Hindernis darstellt. Für den Fahrer des Kraftfahrzeugs ist jedoch nur das Objekt 23 von Interesse. Signale, die von der Lauffläche 13 des linken Vorderrads 15 resultieren, irritieren den Fahrer. Insbesondere wenn der Fahrer das Objekt 23 sieht, kann die Warnung, die durch das Erfassen der Lauffläche 13 des linken Vorderrads 15 ausgegeben wird, dazu führen, dass der Fahrer irritiert wird, weil das System nicht das Objekt, sondern die Lauffläche 13 des linken Vorderrads 15 als nächstliegendes Objekt erfasst und daher das vom Fahrer gesehene Objekt weiter entfernt ist als der vom System aufgezeigte Abstand. Dies ist insbesondere dann der Fall, wenn das Objekt 23 etwas weiter vom ersten Abstandssensor 5 entfernt ist als die Lauffläche 13 des linken Vorderrads 15.

Um Irritationen für den Fahrer zu vermeiden, ist es daher notwendig, Signale, die durch ein Echo von der Lauffläche 13 des linken Vorderrads 15 resultieren, zu eliminieren.

Entsprechendes gilt bei nach rechts eingeschlagenen Rädern für den letzten Abstandssensor 7. Bei nach rechts eingeschlagenem rechten Vorderrad 25 wird analog ein von der Lauffläche 27 des rechten Vorderrads 25 reflektiertes Echo erfasst und dem Fahrer als Objekt angezeigt.

Da das Verhalten für den ersten Abstandssensor 5 und den letzten Abstandssensor 7 jeweils das gleiche ist, bei nach links eingeschlagenen lenkbaren Vorderrädern 9 für den ersten Abstandssensor 5 und bei nach rechts eingeschlagenen lenkbaren Vorderrädern 9 für den letzten Abstandssensor 7, wird das erfindungsgemäße Verfahren nachfolgend beispielhaft für den ersten Abstandssensor 5 auf der linken Seite des Fahrzeugs beschrieben.

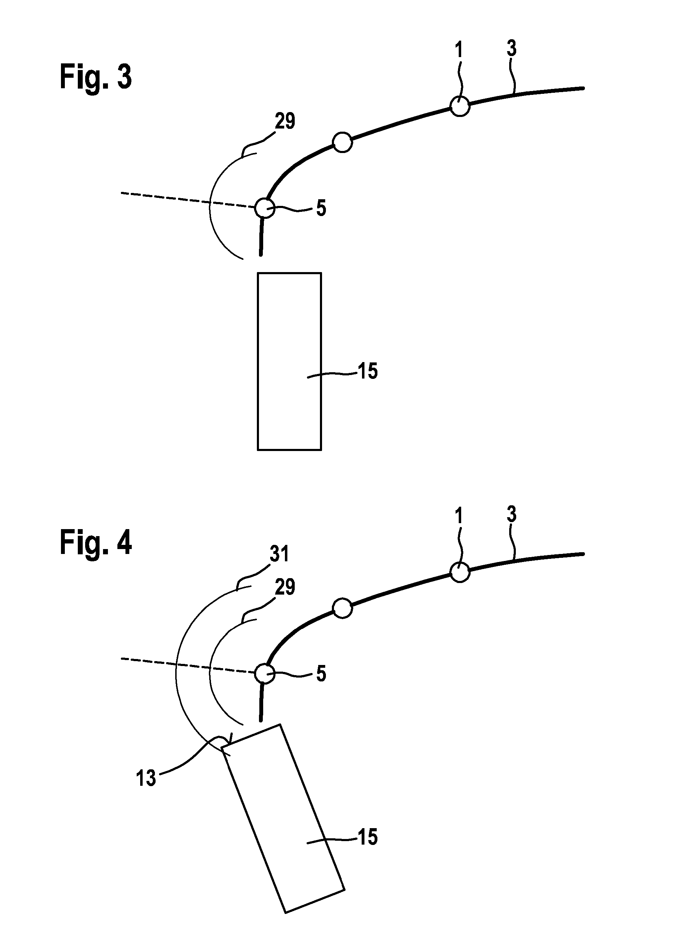

Hierzu ist in Figur 3 die linke Vorderseite eines Kraftfahrzeugs mit nicht eingelenktem Rad schematisch dargestellt.

Um Objekte in der Umgebung des Kraftfahrzeugs zu erfassen, wird vom ersten Abstandssensor 5 ein Signal gesendet, das von Objekten in der Umgebung des Kraftfahrzeugs reflektiert wird. Das reflektierte Echo wird dann vom ersten Abstandssensor 5 empfangen und aus der Laufzeit des Signals vom Senden des Signals bis zum Empfangen des Echos der Abstand zu dem Objekt berechnet. Bei nicht eingeschlagenem linken Vorderrad 15, wie es in Figur 3 dargestellt ist, wird vom Vorderrad 15 das vom ersten Abstandssensor 5 gesendete Signal nicht reflektiert und somit kann das linke Vorderrad 15 auch nicht als Objekt detektiert werden. In diesem Fall kann der erste Abstandssensor 5 vollständig zur Erfassung der Umgebung des Kraftfahrzeugs herangezogen werden. Die minimale Entfernung eines Objekts, die detektiert werden kann, wird durch die Nachschwinggrenze 29 des ersten Abstandssensors 5 definiert. Die Nachschwinggrenze 29 stellt den Abstand dar, den ein Objekt haben muss, damit die Membran des ersten Abstandssensors 5 ihr Nachschwingen beendet hat, wenn ein von einem Objekt reflektiertes Echo vom ersten Abstandssensor 5 wieder empfangen wird. Dies ist für eine klare Erfassung eines Messsignals erforderlich.

In Figur 4 ist die linke Vorderseite eines Kraftfahrzeugs mit einem leichten Radeinschlag schematisch dargestellt.

Im Unterschied zur Figur 3 ist das linke Vorderrad 15 bei der Darstellung gemäß Figur 4 leicht eingeschlagen. Dies führt im Allgemeinen dazu, dass das Rad aus dem Radkasten leicht hervorsteht. Durch das Hervorstehen des linken Vorderrads 15 aus dem Radkasten kann die Lauffläche 13 des linken Vorderrads 15 vom ersten Abstandssensor 5 als Objekt erfasst werden. Um zu vermeiden, dass die Lauffläche 13 des linken Vorderrads 15 als Objekt erfasst wird, werden Signale, die auf ein Objekt deuten, das zwischen der Nachschwinggrenze 29 und einem vorgegebenen Maximalwert 31 liegt, zur Ausblendung vorgemerkt. Die vorgegebene Maximalgrenze 31 stellt dabei den maximalen Abstand der Lauffläche 13 zum ersten Abstandssensor 5 dar. Objekte, die sich außerhalb der vorgegebenen Maximalgrenze 31 befinden, sind definitiv Objekte au-βerhalb des Kraftfahrzeugs und stellen somit Hindernisse dar.

Die Nachschwinggrenze 29 stellt einen vorgegebenen Minimalwert dar. Unterhalb der Nachschwinggrenze 29 und damit des vorgegebenen Minimalwerts können Objekte nicht mehr detektiert werden. Wenn die minimale Entfernung zur Lauffläche 13 des linken Vorderrads 15 größer ist als die Nachschwinggrenze 29, ist es vorteilhaft, wenn als vorgegebene Minimalgrenze nicht die Nachschwinggrenze 29 vorgesehen wird, sondern der minimale Abstand zur Lauffläche 13 des linken Vorderrads 15.

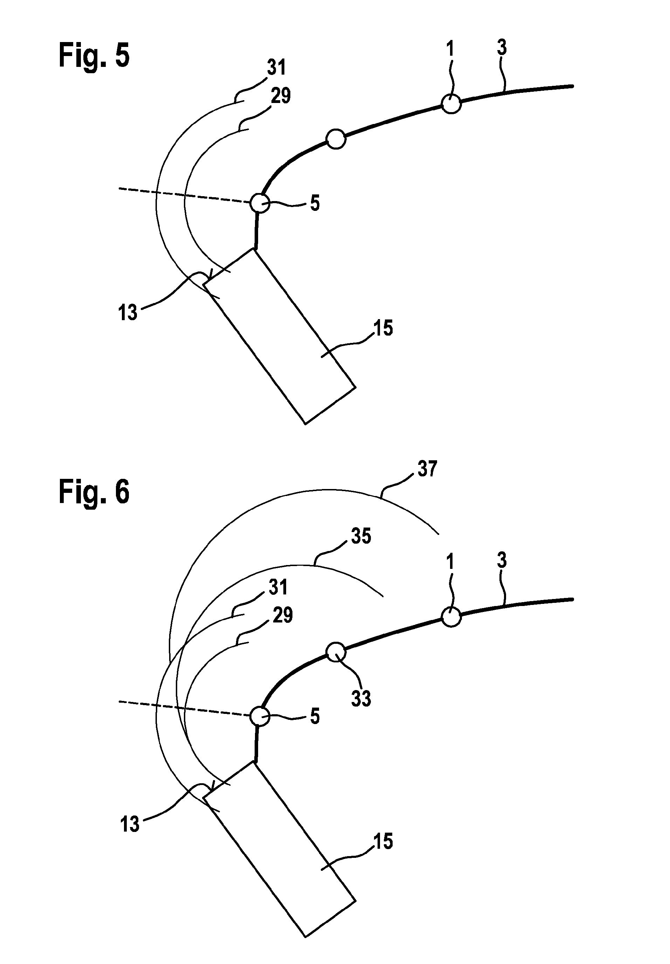

In Figur 5 ist die linke Vorderseite des Kraftfahrzeugs mit einem starken Radeinschlag dargestellt. Bei einem starken Radeinschlag des linken Vorderrads 15 ist der maximale Abstand zwischen der Lauffläche 13 und dem ersten Abstandssensor 5 größer als bei einem nur leicht eingeschlagenen Rad. Aus diesem Grund ist es auch sinnvoll, wenn die vorgegebene Maximalgrenze 31 angepasst wird und einen größeren Wert anzeigt als bei einem nur leicht eingeschlagenen linken Vorderrad 15. Erfindungsgemäß kann hierzu zum Beispiel die vorgegebene Maximalgrenze 31 in Abhängigkeit vom Einschlagwinkel des linken Vorderrads 15 festgelegt werden. Hierzu ist es zum Beispiel möglich, die Lenkradstellung zu nutzen. Die Lenkradstellung kann zum Beispiel durch einen entsprechend geeigneten Sensor erfasst werden und anderen Assistenzsystemen im Fahrzeug, beispielsweise auch dem Fahrassistenzsystem, mit dem das vorliegende Verfahren durchgeführt wird, zur Verfügung gestellt werden. Zur Durchführung des erfindungsgemäßen Verfahrens ist es insbesondere erforderlich, dass ein geeignetes Steuergerät eingesetzt wird, mit dem die Daten der Abstandssensoren 5 erfasst werden und daraus den Abstand zu einem Objekt zu bestimmen. Mithilfe des Steuergeräts lassen sich dann auch die Signale des ersten Abstandssensors 5 eliminieren, die darauf hindeuten, dass die Lauffläche 13 des linken Vorderrads 15 erfasst wird.

Um Signale des ersten Abstandssensors 5 zu eliminieren, die die Lauffläche 13 des linken Vorderrads 15 als Objekt darstellen können, wird erfindungsgemäß ein Kreuzecho zwischen dem ersten Abstandssensor 5 und einem zweiten Abstandssensor 33 oder ein Direktecho des zweiten Abstandssensors 33 herangezogen. Als Kreuzecho wird dabei ein Signal verstanden, bei dem ein lmpuls des ersten Abstandssensors 5 vom zweiten Abstandssensor 33 empfangen wird und daraus ein Abstand berechnet wird. Alternativ ist es auch möglich, dass ein vom zweiten Abstandssensors 33 gesendeter lmpuls vom ersten Abstandssensor 5 empfangen wird. Als Direktecho des zweiten Abstandssensors 33 wird ein Signal bezeichnet, bei dem ein lmpuls, der vom zweiten Abstandssensor 33 gesendet wird, von einem Objekt reflektiert wird und das reflektierte Echo wieder vom zweiten Abstandssensor 33 empfangen wird.

Um Signale zu eliminieren, die durch eine Reflektion des Impulses des ersten Abstandssensors 5 von der Lauffläche 13 des linken Vorderrads 15 resultieren, wird sowohl für das Kreuzecho ein Grenzwert 35 als auch für das Direktecho des zweiten Abstandssensors 33 ein Grenzwert 37 vorgegeben.

Wenn nun ein vom ersten Abstandssensor empfangenes Echo eines gesendeten Impulses 11 des ersten Abstandssensors 5 auf ein Objekt mit einem Abstand hindeutet, der zwischen der Nachschwinggrenze 29 und der vorgegebenen Maximalgrenze 31 liegt, wird dieses Signal zunächst zur Ausblendung vorgesehen. Um festzulegen, ob das Signal von der Lauffläche 13 des linken Vorderrads 15 oder von einem Objekt au-βerhalb des Kraftfahrzeugs stammt, wird zusätzlich das Kreuzecho zwischen dem ersten Abstandssensor 5 und dem zweiten Abstandssensor 33 oder das Direktecho des zweiten Abstandssensors 33 herangezogen. Wenn das Kreuzecho zu einem Abstand führt, der oberhalb des Grenzwerts 35 für das Kreuzecho liegt, wird das Signal des ersten Abstandssensors 5 ausgeblendet. Entsprechend wird das Signal auch dann ausgeblendet, wenn der Abstand des Objekts größer ist als der Grenzwert 37 für das Direktecho des zweiten Abstandssensors 33. In diesem Fall ist davon auszugehen, dass das Objekt die Lauffläche 13 des linken Vorderrads 15 und nicht ein Objekt in der Umgebung des Kraftfahrzeugs ist.

Wenn jedoch das Kreuzecho zu einem Abstand eines Objekts führt, der kleiner als der Grenzwert 35 für das Kreuzecho ist, ist davon auszugehen, dass das so detektierte Objekt in der Umgebung des Kraftfahrzeugs ist. Das Signal des ersten Abstandssensors 5 braucht nicht eliminiert werden, sondern kann zur Berechnung des Abstands herangezogen werden. Entsprechend ist auch ein Abstand zu einem Objekt, der kleiner ist als der Grenzwert 37 für das Direktecho des zweiten Abstandssensors und der vom zweiten Abstandssensor 33 erfasst wird, ein Hinweis darauf, dass sich ein Objekt in der Umgebung des Kraftfahrzeugs befindet und nicht die Lauffläche des linken Vorderrads 15 vom ersten Abstandssensor 5 ermittelt wurde. Auch in diesem Fall kann somit das vom ersten Abstandssensor 5 ermittelte Abstandssignal herangezogen werden.

Signale, die von der Lauffläche 13 des linken Vorderrads 15 resultieren, werden somit sicher ausgeschlossen und der Fahrer bekommt keine irritierenden Warnhinweise.

Da sich der maximale Abstand der Lauffläche 13 zum ersten Abstandssensor 5 mit dem Einschlagwinkel des Rads ändert, ist es weiterhin auch vorteilhaft, den Grenzwert 35 für das Kreuzecho und den Grenzwert 37 für das Direktecho des zweiten Abstandssensors 33 dynamisch an den Lenkeinschlag des linken Vorderrads 15 anzupassen. In diesem Fall werden die Grenzwerte 35, 37 dynamisch angepasst und es entsteht kein Sprung in den Warnhinweisen für den Fahrer. Ein echtes Hindernis, das von den Abstandssensoren detektiert wird, wird von den übrigen Abstandssensoren 1 erfasst, während das Signal des ersten Abstandssensors 5 eliminiert wird. Daten, die vom ersten Abstandssensor 5 erfasst werden, werden erst dann zugeschaltet, wenn sich das erfasste Objekt unterhalb eines der Grenzwerte 35, 37 befindet. Aufgrund der Anpassung an den Einschlagwinkel des lenkbaren Vorderrads 15 sollten jedoch die Grenzwerte 35, 37 im gleichen Anzeigewertebereich liegen.

Bei einer Geradeausfahrt ist es weiterhin vorteilhaft, wenn der vorgegebene Maximalwert 31 und die Nachschwinggrenze 29 verschmelzen. Auf diese Weise wird bei Geradeausfahrt kein Signal eliminiert und der erste Abstandssensor 5 kann zum Beispiel zur Erfassung von Parklücken bei der Vorbeifahrt des Fahrzeugs an einer Parklücke eingesetzt werden. Auch bei der normalen Abstandsmessung, wie sie beim Einparken des Kraftfahrzeugs eingesetzt wird, wird das Signal des ersten Abstandssensors 5 nur ausgeblendet, wenn die lenkbaren Vorderräder 9 eingelenkt sind. In diesem Fall erfolgt die Freigabe sobald das Hindernis dicht genug am Fahrzeug ist, so dass der Abstand zum zweiten Abstandssensor 33 so bestimmt wird, dass dieser kleiner ist als der Grenzwert 35 für das Kreuzecho oder der Grenzwert 37 für das Direktecho des zweiten Abstandssensors 33.

Alternativ gibt es weiterhin die Möglichkeit, das vom ersten Abstandssensor 5 empfangene Direktecho nachzuverfolgen. Wenn dieses von einem Objekt stammt, das zunächst weiter entfernt ist als der vorgegebene Maximalwert 31, der den maximalen Abstand der Lauffläche 13 des Vorderrads 15 vom ersten Abstandssensor 5 zeigt, ist das entsprechende Objekt, das sich an das Fahrzeug annähert ein tatsächliches Objekt und nicht die Lauffläche des Vorderrads 15. Wenn sich jedoch das Auto mit einem eingeschlagenen Vorderrad 15 bewegt und das Direktecho vom ersten Abstandssensor 5 einen konstanten Wert liefert, so ist dies ein Indiz dafür, dass es sich hierbei um das von der Lauffläche 13 des Vorderrads 15 reflektierte Echo handelt und somit ausgeblendet werden kann.

## Patentansprüche

1. Verfahren zur Messung des Abstandes zwischen einem Objekt (23) und einem Kraftfahrzeug mit am Kraftfahrzeug positionierten Abstandssensoren (1), folgende Schritte umfassend:
(a) Senden eines Signals (11) von einem ersten Abstandssensor (5), Empfangen eines von einem Objekt (23) reflektierten Echos (17) des Signals (11) von dem ersten Abstandssensor (5) als Direktecho des ersten Abstandssensors (5) und Berechnen des Abstands zwischen dem Kraftfahrzeug und dem Objekt (23) aus der Zeitspanne zwischen Senden des Signals (11) und Empfangen des Echos (17) des Signals,
(b) Empfangen des von einem Objekt (23) reflektierten Echos (17) von einem zweiten Abstandssensor (33) und/oder Senden eines zweiten Signals vom zweiten Abstandssensor (33) und Empfangen des von dem Objekt (23) reflektierten Echos (17) vom ersten Abstandssensor (5) als Kreuzecho und Berechnen des Abstands zwischen dem Kraftfahrzeug und dem Objekt (23) aus der Zeitspanne zwischen Senden des Signals (11) und Empfangen des Echos (17), und/oder Senden eines Signals von dem zweiten Abstandssensor (33) und empfangen des Echos von einem Objekt von dem zweiten Abstandssensor (33) als Direktecho des zweiten Abstandssensors (33) und Berechnen des Abstands zwischen dem Kraftfahrzeug und dem Objekt (23) aus der Zeitspanne zwischen Senden des Signals und Empfangen des Echos (17), wenn das Objekt (23) so positioniert ist, dass ein Signal des zweiten Abstandssensors (33) von dem Objekt (23) reflektiert werden kann oder ein Echo eines Signals von dem Objekt von dem zweiten Abstandssensor (33) empfangen werden kann,
(c) Eliminieren des Direktechos des ersten Abstandssensors (5) für die Berechnung des Abstandes zu einem Objekt (23), wenn das Kreuzecho oder das Direktecho des zweiten Abstandssensors (33) größer ist als ein für das Kreuzecho oder das Direktecho des zweiten Abstandssensors (33) vorgegebener Grenzwert (35, 37).

2. Verfahren gemäß Anspruch 1, **dadurch gekennzeichnet, dass** der vorgegebene Grenzwert (35, 37) abhängig ist der Radstellung des lenkbaren Rades (9).

3. Verfahren gemäß Anspruch 1 oder 2, **dadurch gekennzeichnet, dass** das Direktecho des ersten Abstandssensors (5) nur dann eliminiert wird, wenn das Kreuzecho oder das Direktecho des zweiten Abstandssensors (33) größer ist als ein für das Kreuzecho oder das Direktecho des zweiten Abstandssensors (33) vorgegebener Grenzwert (35, 37), wenn gleichzeitig der aus dem Direktecho des ersten Abstandssensors (5) berechnete Abstand größer ist als ein für den Abstandssensor vorgegebener Minimalwert (29) und kleiner als ein vorgegebener Maximalwert (31 ).

4. Verfahren gemäß Anspruch 3, **dadurch gekennzeichnet, dass** der vorgegebene Maximalwert (31) abhängig ist von der Radstellung des lenkbaren Rades (9).

5. Verfahren gemäß Anspruch 3 oder 4, **dadurch gekennzeichnet, dass** der für den ersten Abstandssensor (5) vorgegebene Minimalwert (29) abhängig ist von der Nachschwingzeit des ersten Abstandssensors (5).

6. Verfahren gemäß einem der Ansprüche 3 bis 5, **dadurch gekennzeichnet, dass** bei Geradeausfahrt des Kraftfahrzeugs der vorgegebene Maximalwert (31) und der vorgegebene Minimalwert (29) gleich groß sind.

7. Verfahren gemäß einem der Ansprüche 1 bis 6, **dadurch gekennzeichnet, dass** das Direktecho des ersten Abstandssensors (5) dann nicht eliminiert wird, wenn eine Annäherung des Kraftfahrzeugs an das mit dem Direktecho detektierte Objekt (23) festgestellt wird und anfänglich empfangene Direktechos des ersten Abstandssensors (5) größer waren als der vorgegebene Maximalwert (31).

8. Verfahren gemäß einem der Ansprüche 1 bis 7, **dadurch gekennzeichnet, dass** als Abstandssensoren (1) Ultraschallsensoren eingesetzt werden.
